# EUROPEAN PATENT SPECIFICATION

(11) **EP 3 166 084 B1**
(45) Date of publication and mention of the grant of the patent: **06.03.2024**
(21) Application number: 16180186.5
(22) Date of filing: 19.07.2016
(51) Int. Cl.: G06T 19/20, G06T 7/70, G06F 3/01, B25J 9/16, G06V 20/00

(54) **METHOD AND SYSTEM FOR DETERMINING A CONFIGURATION OF A VIRTUAL ROBOT IN A VIRTUAL ENVIRONMENT**
VERFAHREN UND SYSTEM ZUR BESTIMMUNG DER KONFIGURATION EINES VIRTUELLEN ROBOTERS IN EINER VIRTUELLEN UMGEBUNG
PROCÉDÉ ET SYSTÈME POUR DÉTERMINER UNE CONFIGURATION D'UN ROBOT VIRTUEL DANS UN ENVIRONNEMENT VIRTUEL

(30) Priority: 25.09.2015 US 201514865226
(43) Date of publication of application: 10.05.2017
(73) Proprietor: Siemens Industry Software Ltd., 7019900 Airport City (IL)
(72) Inventor: BLUMENFELD, Rafael, 4336901 Raanana (IL); SCHWIMMER, Moshe, 5236109 Ramat-Gan (IL)
(74) Representative: Siemens Patent Attorneys

(56) References cited:
- US-A1- 2015 217 455
- PAUWELS KARL ET AL: "Real-time object pose recognition and tracking with an imprecisely calibrated moving RGB-D camera", 2014 IEEE/RSJ INTERNATIONAL CONFERENCE ON INTELLIGENT ROBOTS AND SYSTEMS, IEEE, 14 September 2014 (2014-09-14), pages 2733-2740, XP032676691, DOI: 10.1109/IROS.2014.6942936 [retrieved on 2014-10-31]
- Karl Pauwels ET AL: "Real-time RGB-D-based Object and Manipulator Pose Estimation", Robotics 2014: Science and Systems, Workshop on RGB-D: Advanced Reasoning with Depth Cameras, 12 July 2014 (2014-07-12), pages 1-3, XP055362811, Berkeley, CA, USA Retrieved from the Internet: URL:http://homepages.inf.ed.ac.uk/svijayak /publications/pauwels-RSS2014.pdf [retrieved on 2017-04-07]
- Y-H CHEN I ET AL: "Mixed reality simulation for mobile robots", 2009 IEEE INTERNATIONAL CONFERENCE ON ROBOTICS AND AUTOMATION : (ICRA) ; KOBE, JAPAN, 12 - 17 MAY 2009, IEEE, PISCATAWAY, NJ, USA, 12 May 2009 (2009-05-12), pages 232-237, XP031509559, ISBN: 978-1-4244-2788-8

## Description

### TECHNICAL FIELD

The present disclosure is directed, in general, to computer-aided design, visualization, and manufacturing ("CAD") systems, product lifecycle management ("PLM") systems, product data management ("PDM") systems, and similar systems, that manage data for products and other items (collectively, "Product Data Management" systems or PDM systems).

### BACKGROUND OF THE DISCLOSURE

In order to design and plan robotic cells in industrial facilities, a large variety of information is needed since a robotic cell typically includes other equipment pieces that interact in a dynamic industrial environment with one or more robots.

The planning of the robotic program is important to prevent undesired collisions between the robot and any surrounding equipment piece during the robotic process, while at the same time it is also needed to ensure that the manufacturing job is fulfilled and that the desired manufacturing requirements are met.

In order to handle such challenges, three-dimensional (3D) simulations of the robotic processes in a virtual environment are created for optimization and safety purposes. Robotic simulations may advantageously enable advance notice of possible problematic issues so that the industrial environment is rendered a safer working place.

In the virtual environment, it is often a common requirement that the pose of the virtual robot in the virtual scene accurately reflect the pose of the real robot in the real industrial scene.

In the art, the term "pose" of an object is typically understood to refer to the position and orientation of that object. A robot is typically schematically defined as having a base link (or simply base) and a set of links and joints. As used herein, the term "pose" of a robot is defined to include the description of all the positions and orientations of all the links and joints of the robot. As used herein, the configuration of a robot is the posture of the robot, i.e., the description of all the positions and orientations of all the links and joints of the robot other than the base link. Hence, as used herein, the robot pose includes both the robot configuration and the position and orientation of the robot base.

The task of teaching the robot behavior in the virtual environment is a difficult one. In particular, in planning industrial processes, it is a difficult task to determine what the pose of one or more virtual robots should be in the virtual environment. Such tasks become even more problematic in industrial scenarios where one or more robots operate in a dynamic industrial environment including several equipment pieces.

The programming of industrial robots is usually performed through two main techniques. The first technique is a direct controlling of the robot movements via teach pendant. The drawbacks of the teach pendant usage, among others, include slowness and complexity of usage, often involving several tedious interactions. For example, fragmented works are required with equipment pieces of the real scene, such as, for example, conveyors, which may need to be invoked for short periods for each single robot posture. Unfortunately, such complex interactions limit the opportunities of obtaining convenient robot path optimizations via simulation.

The second technique is defining the relevant robot poses directly in the virtual environment. This technique typically makes use of the tools provided by offline robot programming (OLP). For example, the relevant robot deflection points and grab positions are defined in the virtual environment in order to perform the software evaluation of the required robotic paths to reach such relevant poses. Such tasks are typically performed with conventional CAD and CAD-like tools, by using a mouse, a keyboard, and other traditional human machine interfaces (HMI), so as to set the robots in the given desired poses. A drawback of this second technique, among others, is traditional HMI devices are not designed for this purpose so that their usage is cumbersome. Another drawback lies in the existing gap between the real scene and its reflection in the virtual scene of the virtual environment.

Prior art document "Real-time object pose recognition and tracking with an imprecisely calibrated moving RGB-D camera" by Pauwels et al., 2014 IEEE/RSJ International Conference on Intelligent Robots and Systems, discloses a technique employing a real-time system for recognizing and tracking the position and orientation of a large number of complex real-world objects, together with an articulated robotic manipulator operating upon them.

Prior art document "Mixed Reality Simulation for Mobile Robots" by Chen et al., 2009 IEEE International Conference on Robotics and Automation, discloses aligning real and virtual world for producing a mixed-reality environment of a robot, for example for simulating a path finding to a target object under user-defined conditions.

Moreover, such techniques are tedious for the user, error prone, and may require multiple iterations with various tools or human interactions that make them ill-suited for the task. Therefore, improved techniques are desirable.

### SUMMARY OF THE INVENTION

Various disclosed embodiments include methods and corresponding systems and computer-readable mediums for determining a configuration of an articulated tr virtual robot in a virtual environment as defined in the appended claims. A method according to the invention includes receiving a positioning of a 3D camera in a real scene and registering it in the virtual environment. A positioning of at least one articulated real robot at a specific configuration in the real scene is received, whereby the robot configuration is varied manually by a user's hand so that robot programming can conveniently be done via physical robot guidance. The 3D camera captures at least one 3D image of the at least one real robot positioned in the real scene. The method also includes identifying, from the at least one captured 3D image, the at least one real robot. The method further includes linking the at least one identified real robot to its corresponding articulated virtual robot and extracting configuration data of the specific configuration in the real scene of the at least one identified real robot. Additionally, the method includes determining, from the extracted configuration data, a specific virtual configuration of the virtual robot in the virtual environment reflecting the configuration of the corresponding real robot in the real scene, and positioning in the virtual environment the virtual robot at a determined specific virtual pose based on the determined specific virtual configuration.

The foregoing has outlined rather broadly the features and technical advantages of the present invention so that those skilled in the art may better understand the detailed description that follows. Additional features and advantages of the invention's embodiments will be described hereinafter that form the subject of the claims. Those skilled in the art will appreciate that they may readily use the conception and the specific embodiment disclosed as a basis for modifying or designing other structures for carrying out the same purposes of the present invention. Those skilled in the art will also realize that such equivalent constructions do not depart from the scope of the invention in its broadest form, when they are encompassed by the scope of the independent claims.

Before undertaking the DETAILED DESCRIPTION below, it may be advantageous to set forth definitions of certain words or phrases used throughout this patent document: the terms "include" and "comprise," as well as derivatives thereof, provide inclusion without limitation; the term "or" is inclusive (e.g., and/or); the phrases "associated with" and "associated therewith," as well as derivatives thereof, may be to include, be included within, interconnect with, contain, be contained within, connect to or with, couple to or with, be communicable with, cooperate with, interleave, juxtapose, be proximate to, be bound to or with, have, have a property of, or the like; and the term "controller" is any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:
Figure 1 illustrates a block diagram of a data processing system in which an embodiment can be implemented;
Figure 2 illustrates a schematic view of a virtual robot in a virtual environment reflecting the configuration of a real robot in accordance with disclosed embodiments;
Figure 3 illustrates a flowchart of a process for determining a configuration of a virtual robot in a virtual environment in accordance with disclosed embodiments.

### DETAILED DESCRIPTION

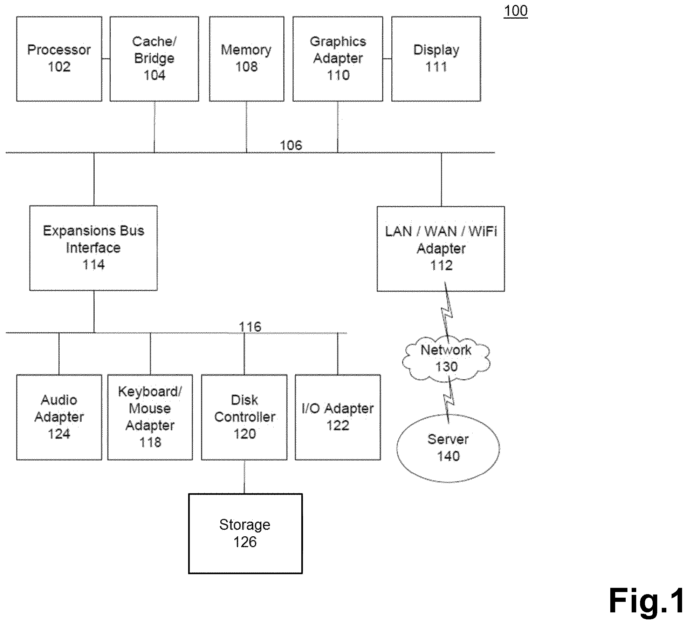

FIGURES 1 through 3, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. The numerous innovative teachings of the present application will be described with reference to exemplary non-limiting embodiments.

Previous techniques for determining the virtual configuration of virtual robots in an industrial scene are cumbersome, tedious, error-prone, and otherwise ill-suited for the task.

Embodiments provide numerous benefits including, but not limited to: providing a user-friendly manner for modeling or for performing modification of the virtual scenes of the simulation environment; enabling a user-friendly control of the configuration of robots in an intuitive manner so that the industrial simulation and planning is done as it was in the real world; enabling a user friendly usage in a mixed real-virtual environment that include a virtual environment and a real robot that can be taught manually in a virtual production scenario; facilitating, for non-expert users, the usage of industrial robot simulation and optimization packages on a shop floor (such as Process Simulate and Robot Expert provided by Siemens Product Lifecycle Management Software Inc. (Plano, Texas)) to execute the virtual simulation for ongoing production simulation. Examples of cases where non expert users would particularly benefit from a user friendly software robot simulation and optimization package is the industrial space of handling and pick-and-place.

Embodiments may be particularly beneficial for software packages that incorporate 3D robot cell design, including, but not limited to, Process Simulate, Robot Expert, and others provided by Siemens Product Lifecycle Management Software Inc. (Plano, Texas) or packages offered by other software suppliers.

Embodiments enable the teaching of a virtual robot in a virtual production scenario with other surrounding virtual equipment pieces even in a real test scenario where the other real equipment pieces and the real surrounding production environment are not present in the real world, but are present in the virtual world instead.

In other embodiments, for example in a scenario where the surrounding equipment pieces are not in function, the robot teaching can advantageously be done safely, because, in the real scenario, only the real robot is moved and not the real equipment pieces.

Figure 1 illustrates a block diagram of a data processing system 100 in which an embodiment can be implemented, for example as a PDM system particularly configured by software or otherwise to perform the processes as described herein, and in particular as each one of a plurality of interconnected and communicating systems as described herein. The data processing system 100 illustrated can include a processor 102 connected to a level two cache/bridge 104, which is connected in turn to a local system bus 106. Local system bus 106 may be, for example, a peripheral component interconnect (PCI) architecture bus. Also connected to local system bus in the illustrated example are a main memory 108 and a graphics adapter 110. The graphics adapter 110 may be connected to display 111.

Other peripherals, such as local area network (LAN) / Wide Area Network / Wireless (e.g., WiFi) adapter 112, may also be connected to local system bus 106. Expansion bus interface 114 connects local system bus 106 to input/output (I/O) bus 116. I/O bus 116 is connected to keyboard/mouse adapter 118, disk controller 120, and I/O adapter 122. Disk controller 120 can be connected to a storage 126, which can be any suitable machine usable or machine readable storage medium, including but not limited to nonvolatile, hard-coded type mediums such as read only memories (ROMs) or erasable, electrically programmable read only memories (EEPROMs), magnetic tape storage, and user-recordable type mediums such as floppy disks, hard disk drives and compact disk read only memories (CD-ROMs) or digital versatile disks (DVDs), and other known optical, electrical, or magnetic storage devices.

Also connected to I/O bus 116 in the example shown is audio adapter 124, to which speakers (not shown) may be connected for playing sounds. Keyboard/mouse adapter 118 provides a connection for a pointing device (not shown), such as a mouse, trackball, trackpointer, touchscreen, etc.

Those of ordinary skill in the art will appreciate that the hardware illustrated in Figure 1 may vary for particular implementations. For example, other peripheral devices, such as an optical disk drive and the like, also may be used in addition or in place of the hardware illustrated. The illustrated example is provided for the purpose of explanation only and is not to imply architectural limitations with respect to the present disclosure.

A data processing system in accordance with an embodiment of the present disclosure can include an operating system employing a graphical user interface. The operating system permits multiple display windows to be presented in the graphical user interface simultaneously, with each display window providing an interface to a different application or to a different instance of the same application. A cursor in the graphical user interface may be manipulated by a user through the pointing device. The position of the cursor may be changed and/or an event, such as clicking a mouse button, generated to actuate a desired response.

One of various commercial operating systems, such as a version of Microsoft Windows^{™}, a product of Microsoft Corporation located in Redmond, Wash. may be employed if suitably modified. The operating system is modified or created in accordance with the present disclosure as described.

LAN/ WAN/Wireless adapter 112 can be connected to a network 130 (not a part of data processing system 100), which can be any public or private data processing system network or combination of networks, as known to those of skill in the art, including the Internet. Data processing system 100 can communicate over network 130 with server system 140, which is also not part of data processing system 100, but can be implemented, for example, as a separate data processing system 100.

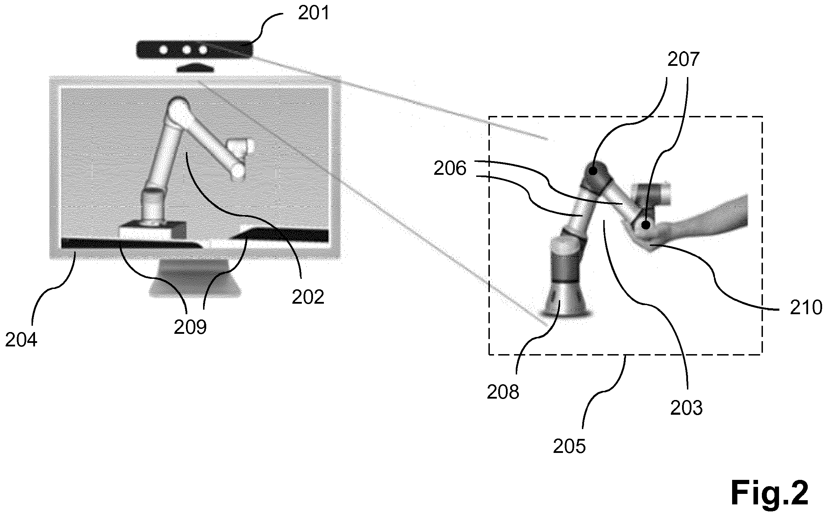

Figure 2 illustrates a schematic view of a virtual robot in a virtual environment reflecting the configuration of a real robot in accordance with disclosed embodiments.

The virtual environment of a robotic cell that typically includes a set of robots and a set of other industrial equipment pieces is presented and controlled by a software package. Examples of such software packages include, but are not limited to, OLP programming software packages and/or robot simulation software packages.

A virtual robot 202 is available in a virtual environment 204. A virtual scene of the virtual environment 204 is already populated with one or more virtual robots 202 reflecting one or more real robots 203 of a real environment 205. At least one of such robot is captured by a 3D camera 201.

The real robot 203 has a base link 208, links 206 and joints 207. The configuration of the real robot can be varied by moving the links 206 and/or the joints 207 of the real robots. The robot configuration is varied manually by a user's hand 210 so that robot programming can conveniently be done via physical robot guidance.

As illustrated in Figure 2, the configuration of the virtual robot 202 in the virtual environment 204 reflects the configuration of the corresponding real robot 203. Those skilled in the art recognize that, in some embodiments, the virtual robot 202 may have a different position and orientation of the base link in the virtual environment than its corresponding real robot 203 whilst still sharing the same configuration. The position and orientation of the robot base may conveniently be determined to fit a particular arrangement of the virtual environment scene.

In some embodiments, at least one adjustment may be made to the determined virtual pose of the virtual robots so as to obtain an adjusted virtual pose of the virtual robot. Adjustments towards an adjusted virtual pose of the virtual robot may be done for a variety of reasons. For example, the virtual scene of the environment may be populated by several other equipment pieces 209, including other robots (not shown); adjustments to the robot virtual pose may prevent collisions and undesired proximities with the surrounding equipment pieces. Other reasons for adjustments may include low resolution of the 3D camera, link location discrepancies determined via collision checks in small volumes, optimization of the target positioning of a tool to be attached to the robot, energy savings, and other relevant industrial fine tunings.

Once at least two robot poses are determined, the robot software calculates the robotic path between poses taking into account a set of defined constraints.

It is noted that in the exemplary embodiment of Figure 2, it is illustrated the case where, in the real scene, there is a stand-alone real robot 203 without any equipment piece in the surrounding, whilst it is noted that the corresponding virtual robot 203 is surrounded by other equipment pieces 209. The virtual scene may include a large variety of equipment pieces to reflect the desired industrial facility; while the real robot 207 may be placed as a standalone robot in a real scene in the range of the 3D camera 201 for teaching and programming purposes.

In other embodiments, the real robot 207 may be placed in the real scene of the 3D camera range with other equipment pieces in the surrounding.

The choice between the two above alternatives depends whether the full real scene with a real robot surrounded with all the real equipment pieces is already set and available or, instead, only the real robot is available as a standalone. In the latter case, the virtual equipment pieces surrounding the virtual robot are conveniently added to the virtual robotic cell for robot programming and simulation purposes of an industrial scenario that is in a different location or not set yet.

In other embodiments, a plurality of different real robots 207 may simultaneously be captured by the 3D camera 201 and identified accordingly. For the set of virtual robots 202 available for the virtual environment, a corresponding set of 3D virtual models is provided within the system. Examples of 3D virtual model include, but are not limited to, CAD models, CAD-like models, point cloud models, 3D computer models and others. The set of 3D virtual models may be provided from a variety of different sources including, but not limited to, a virtual simulation environment, a CAD library, a CAD software connected to the virtual simulation environment, by point cloud scans, by 2D image scans, mechanical scans, manually modelled, and other sources. A CAD model is a particular type of 3D virtual model; in the exemplary embodiment illustrated in Figures 2, the virtual robot 202 may be modeled by a CAD model.

The 3D camera 201 is located in the real scene and is registered in the virtual world to provide a consistent offset, e.g., by defining the 3D camera position and orientation in the virtual scene. After the 3D camera 201 has captured at least one 3D image of the real robot 203, the real robot 203 is identified. The identified real robot 203 is linked to the corresponding virtual robot 202. As used herein the term "3D image" is used to denote, for simplicity purposes, a set or stream of frames from the 3D camera.

In some embodiments, the linking between the real robot 203 and the corresponding virtual robot 202 may be adapted to be done manually by a user. In other embodiments, the linking may be done by automatic recognition via picking. In such a latter case, the software is able to link the 3D camera image to the specific virtual robot 202 having a given 3D scan.

In some embodiments, the relevant CAD models may be taken from an existing CAD library. By extracting configuration data of the real robot 203 in the real scene, the virtual robot 202 is calibrated according to the corresponding real robot 203 so that the virtual robot 202 has a virtual configuration that reflects the real configuration of the corresponding real robot 203 in the real scene 205.

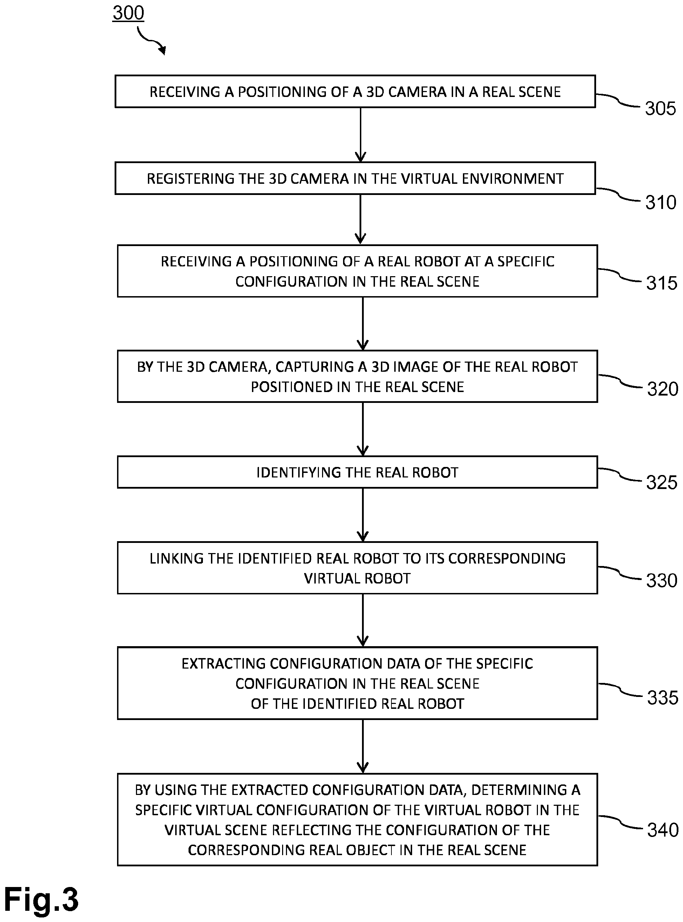

Figure 3 illustrates a flowchart 300 of a process for determining a configuration of a virtual robot in a virtual environment in accordance with disclosed embodiments. Such a process can be performed, for example, by system 100 of Figure 1 described above. Moreover, the "system" in the process below can be any apparatus configured to perform a process as described.

The virtual environment includes a virtual scene reflecting a real scene of a real environment. It is provided at least one virtual robot representing at least one real robot and such virtual robot is defined by a 3D virtual model.

At act 305, a positioning of a 3D camera in the real scene is received.

At act 310, the 3D camera is registered in the virtual environment for calibration purposes.

At act 315, a positioning of at least one real robot at a specific configuration in the real scene is received.

At act 320, the 3D camera captures at least one 3D image of the at least one real object positioned in the real scene.

At act 325, the at least one real robot is identified from the at least one captured 3D image.

At act 330, the at least one identified real robot is linked to its corresponding virtual robot.

At act 335, configuration data of the specific configuration in the real scene of the at least one identified real robot is extracted.

At act 340, by using the extracted configuration data, determining a specific virtual configuration of the virtual robot in the virtual environment reflecting the specific configuration of the corresponding real object in the real scene.

In some embodiments, the virtual robot may be positioned in the virtual environment at a determined virtual pose based on the determined virtual configuration.

In some embodiments, one or more adjustments to the determined virtual pose of the virtual robot are made so as to determine an adjusted virtual pose of the virtual robot.

In some embodiments, the real robot may receive a positioning at an adjusted real configuration reflecting the determined adjusted virtual pose of the virtual robot so that a feedback from the virtual world to the real world may advantageously be provided. For example, a response to the virtual world modifications may be performed by physically instructing the robot manipulators to respond to robot configuration changes and/or to equipment configuration changes.

Hence, the real robot may be taught an adjusted configuration based on the virtual adjustments that may be done automatically by the software upon requirement.

In some embodiments, a variation of positioning of the configuration of the identified real robot is received, and a specific second virtual configuration of the corresponding linked virtual robot is re-determined so as to reflect the varied configuration of the real robot by repeating acts 320, 335 and 340 accordingly. Through such embodiments, a dynamic update may advantageously be provided.

One or more of the processor 102, the memory 108, and the simulation program running on the processor 102 receive the inputs via one or more of the local system bus 106, the adapter 112, the network 130, the server 140, the interface 114, the I/O bus 116, the disk controller 120, the storage 126, and so on. Receiving, as used herein, can include retrieving from storage 126, receiving from another device or process, receiving via an interaction with a user, or otherwise.

Of course, those of skill in the art will recognize that, unless specifically indicated or required by the sequence of operations, certain acts in the processes described above may be omitted, performed concurrently or sequentially, or performed in a different order.

Those skilled in the art will recognize that, for simplicity and clarity, the full structure and operation of all data processing systems suitable for use with the present disclosure is not being illustrated or described herein. Instead, only so much of a data processing system as is unique to the present disclosure or necessary for an understanding of the present disclosure is illustrated and described. The remainder of the construction and operation of data processing system 100 may conform to any of the various current implementations and practices known in the art.

It is important to note that while the disclosure includes a description in the context of a fully functional system, those skilled in the art will appreciate that at least portions of the mechanism of the present disclosure are capable of being distributed in the form of instructions contained within a machine-usable, computer-usable, or computer-readable medium in any of a variety of forms, and that the present disclosure applies equally regardless of the particular type of instruction or signal bearing medium or storage medium utilized to actually carry out the distribution. Examples of machine usable/readable or computer usable/readable mediums include: nonvolatile, hard-coded type mediums such as read only memories (ROMs) or erasable, electrically programmable read only memories (EEPROMs), and user-recordable type mediums such as floppy disks, hard disk drives and compact disk read only memories (CD-ROMs) or digital versatile disks (DVDs).

Although an exemplary embodiment of the present disclosure has been described in detail, those skilled in the art will understand that various changes, substitutions, variations, and improvements disclosed herein may be made without departing from the scope of the disclosure in its broadest form.

None of the description in the present application should be read as implying that any particular element, act, or function is an essential element that must be included in the claim scope: the scope of patented subject matter is defined only by the allowed claims.

## Claims

1. A method for teaching, by a data processing system, a configuration of an articulated real robot in a real environment by determining a configuration of an articulated virtual robot in a virtual environment, wherein the virtual environment is provided with at least one virtual robot representing at least one real robot; the at least one virtual robot being defined by a three-dimensional (3D) virtual model; the method comprising:
receiving (305) a positioning of a 3D camera (201) in a real scene;
registering (310) the 3D camera (201) in the virtual environment;
receiving (315) a positioning of at least one articulated real robot (203) at a specific configuration in the real scene; whereby the robot configuration is varied manually by a user's hand so that robot programming can conveniently be done via physical robot guidance;
capturing (320), by the 3D camera, at least one 3D image of the at least one real robot (203) positioned in the real scene;
identifying (325), from the at least one captured 3D image, the at least one real robot (203);
linking (330) the at least one identified real robot (203) to a corresponding articulated virtual robot (202);
extracting (335) configuration data of the specific configuration in the real scene of the at least one identified real robot (203); and
determining (340), from the extracted configuration data, a specific virtual configuration of the virtual robot (202) in the virtual environment (204) reflecting the configuration of the corresponding real robot (203) in the real scene;
positioning in the virtual environment the virtual robot (202) at a determined specific virtual pose based on the determined specific virtual configuration;
and,
once at least two robot poses are determined, calculating the robotic path between poses taking into account a set of defined constraints.

2. The method of claim 1, wherein the 3D virtual model is selected from the group consisting of:
a computer-aided design (CAD) model;
a CAD-like model;
a point cloud model; and
a 3D computer model.

3. The method of claim 1 or 2, further comprising:
receiving a variation of positioning of a second specific configuration of the at least one identified real robot (203);
repeating the capturing, the extracting, and the determining so as to re-determine the configuration of the linked virtual robot (202) at a specific second virtual configuration in the virtual environment (204) reflecting the second specific configuration of the corresponding real robot (203) in the real scene.

4. The method of any of the previous claims, wherein the linking is performed automatically via picking.

5. The method of any of the claims 1 to 3, wherein the linking is adapted to be performed manually.

6. A data processing system comprising:
a processor; and
an accessible memory, the data processing system particularly configured to:
receive a positioning of a 3D three-dimensional camera in a real scene;
register the 3D camera (201) in the virtual environment;
receive a positioning of at least one articulated real robot (203) at a specific configuration in the real scene; whereby the robot configuration is varied manually by a user's hand so that robot programming can conveniently be done via physical robot guidance;
receive inputs, by the 3D camera (201), of capturing at least one 3D image of the at least one real robot (203) positioned in the real scene;
identify, from the at least one captured 3D image, the at least one real robot (203);
link the at least one identified real robot (203) to a corresponding articulated virtual robot (202);
extract configuration data of the specific configuration in the real scene of the at least one identified real robot; and
determine, from the extracted configuration data, a specific virtual configuration of the virtual robot in the virtual environment reflecting the configuration of the corresponding real robot in the real scene.
position in the virtual environment the virtual robot (202) at a determined specific virtual pose based on the determined specific virtual configuration; and,
once at least two robot poses are determined, calculating the robotic path between poses taking into account a set of defined constraints.

7. The data processing system of claim 6, wherein the 3D virtual model is selected from the group consisting of:
a computer-aided design (CAD) model;
a CAD-like model;
a point cloud model; and
a 3D computer model.

8. A non-transitory computer-readable medium encoded with executable instructions that, when executed, cause one or more data processing systems to:
receive a positioning of a three-dimensional 3D camera (201) in a real scene;
register the 3D camera (201) in the virtual environment;
receive a positioning of at least one articulated real robot (203) at a specific configuration in the real scene; whereby the robot configuration is varied manually by a user's hand so that robot programming can conveniently be done via physical robot guidance;
receive inputs, by the 3D camera, of capturing at least one 3D image of the at least one real robot (203) positioned in the real scene;
identify, from the at least one captured 3D image, the at least one real robot (203);
link the at least one identified real robot to a corresponding articulated virtual robot (202);
extract configuration data of the specific configuration in the real scene of the at least one identified real robot (203); and
determine, from the extracted configuration data, a specific virtual configuration of the virtual robot (202) in the virtual environment reflecting the configuration of the corresponding real robot (203) in the real scene;
position in the virtual environment the virtual robot at a determined specific virtual pose based on the determined specific virtual configuration; and,
once at least two robot poses are determined, calculate the robotic path between poses taking into account a set of defined constraints.

## Patentansprüche

1. Verfahren zum Lehren einer Konfiguration eines realen Knickarmroboters in einer realen Umgebung durch ein Datenverarbeitungssystem durch Festlegen einer Konfiguration eines virtuellen Knickarmroboters in einer virtuellen Umgebung, wobei die virtuelle Umgebung mit mindestens einem virtuellen Roboter ausgestattet ist, der mindestens einen realen Roboter repräsentiert, wobei der mindestens eine virtuelle Roboter durch ein virtuelles dreidimensionales (3D-) Modell definiert ist, wobei das Verfahren Folgendes umfasst:
Empfangen (305) einer Positionierung einer 3D-Kamera (201) an einem realen Ort,
Verzeichnen (310) der 3D-Kamera (201) in der virtuellen Umgebung,
Empfangen (315) einer Positionierung mindestens eines realen Knickarmroboters (203) in einer bestimmten Konfiguration an dem realen Ort, wobei die Roboterkonfiguration von einem Benutzer per Hand manuell verändert wird, so dass eine Roboterprogrammierung praktischerweise über physische Roboterführung erfolgen kann,
Aufnehmen (320) mindestens eines 3D-Bildes von dem mindestens einen an dem realen Ort positionierten, realen Roboter (203) durch die 3D-Kamera,
Identifizieren (325) des mindestens einen realen Roboters (203) in dem mindestens einen aufgenommenen 3D-Bild, Verknüpfen (330) des mindestens einen identifizierten realen Roboters (203) mit einem entsprechenden virtuellen Knickarmroboter (202),
Extrahieren (335) von Konfigurationsdaten zu der bestimmten Konfiguration des mindestens einen identifizierten realen Roboters (203) an dem realen Ort und
Festlegen (340) einer bestimmten virtuellen Konfiguration des virtuellen Roboters (202) in der virtuellen Umgebung (204), die der Konfiguration des entsprechenden realen Roboters (203) an dem realen Ort entspricht, anhand der extrahierten Konfigurationsdaten,
Positionieren des virtuellen Roboters (202) in einer festgelegten bestimmten virtuellen Pose auf der Grundlage der festgelegten bestimmten virtuellen Konfiguration in der virtuellen Umgebung und,
wenn mindestens zwei Roboterposen festgelegt sind, Berechnen des Roboterwegs zwischen Posen unter Berücksichtigung einer Reihe von definierten Zwangsbedingungen.

2. Verfahren nach Anspruch 1, wobei das virtuelle 3D-Modell aus der Gruppe ausgewählt ist, die aus Folgendem besteht:
einem Computer-Aided-Design-Modell (CAD-Modell),
einem CAD-artigen Modell,
einem Punktwolkenmodell und
einem 3D-Computermodell.

3. Verfahren nach Anspruch 1 oder 2, das ferner Folgendes umfasst:
Empfangen einer Veränderung der Positionierung einer zweiten bestimmten Konfiguration des mindestens einen identifizierten realen Roboters (203),
Wiederholen des Aufnehmens, des Extrahierens und des Festlegens, um die Konfiguration des verknüpften virtuellen Roboters (202) bei einer bestimmten zweiten virtuellen Konfiguration in der virtuellen Umgebung (204) neu festzulegen, die der zweiten bestimmten Konfiguration des entsprechenden realen Roboters (203) am realen Ort entspricht.

4. Verfahren nach einem der vorhergehenden Ansprüche, wobei das Verknüpfen durch Auswählen automatisch erfolgt.

5. Verfahren nach einem der Ansprüche 1 bis 3, wobei das Verknüpfen so angepasst wird, dass es manuell ausgeführt wird.

6. Datenverarbeitungssystem, das Folgendes umfasst:
einen Prozessor und
einen verfügbaren Speicher, wobei das Datenverarbeitungssystem insbesondere so konfiguriert ist,
dass es:
eine Positionierung einer dreidimensionalen 3D-Kamera an einem realen Ort empfängt,
die 3D-Kamera (201) in der virtuellen Umgebung verzeichnet,
eine Positionierung mindestens eines realen Knickarmroboters (203) in einer bestimmten Konfiguration an dem realen Ort empfängt, wobei die Roboterkonfiguration von einem Benutzer per Hand manuell verändert wird, so dass eine Roboterprogrammierung praktischerweise über physische Roboterführung erfolgen kann,
Eingaben aus der 3D-Kamera (201) beim Aufnehmen mindestens eines 3D-Bildes von dem mindestens einen an dem realen Ort positionierten, realen Roboter (203) empfängt,
anhand des mindestens einen aufgenommenen 3D-Bildes den mindestens einen realen Roboter (203) identifiziert,
den mindestens einen identifizierten realen Roboter (203) mit einem entsprechenden virtuellen Knickarmroboter (202) verknüpft,
Konfigurationsdaten zu der bestimmten Konfiguration des mindestens einen identifizierten realen Roboters an dem realen Ort extrahiert und
anhand der extrahierten Konfigurationsdaten eine bestimmte virtuelle Konfiguration des virtuellen Roboters in der virtuellen Umgebung festlegt, die der Konfiguration des entsprechenden realen Roboters an dem realen Ort entspricht,
den virtuellen Roboter (202) auf der Grundlage der festgelegten bestimmten virtuellen Konfiguration in einer festgelegten bestimmten virtuellen Pose in der virtuellen Umgebung positioniert und,
wenn mindestens zwei Roboterposen festgelegt sind, unter Berücksichtigung einer Reihe von definierten Zwangsbedingungen den Roboterweg zwischen Posen berechnet.

7. Datenverarbeitungssystem nach Anspruch 6, wobei das virtuelle 3D-Modell aus der Gruppe ausgewählt ist, die aus Folgendem besteht:
einem Computer-Aided-Design-Modell (CAD-Modell),
einem CAD-artigen Modell,
einem Punktwolkenmodell und
einem 3D-Computermodell.

8. Nichtflüchtiges, computerlesbares Medium, das mit ausführbaren Anweisungen codiert ist, die, wenn sie ausgeführt werden, bewirken, dass ein oder mehrere Datenverarbeitungssysteme:
eine Positionierung einer dreidimensionalen 3D-Kamera (201) an einem realen Ort empfangen,
die 3D-Kamera (201) in der virtuellen Umgebung verzeichnen,
eine Positionierung mindestens eines realen Knickarmroboters (203) in einer bestimmten Konfiguration an dem realen Ort empfangen, wobei die Roboterkonfiguration von einem Benutzer per Hand manuell verändert wird, so dass eine Roboterprogrammierung praktischerweise über physische Roboterführung erfolgen kann,
Eingaben aus der 3D-Kamera beim Aufnehmen mindestens eines 3D-Bildes von dem mindestens einen an dem realen Ort positionierten, realen Roboter (203) empfangen,
anhand des mindestens einen aufgenommenen 3D-Bildes den mindestens einen realen Roboter (203) identifizieren,
den mindestens einen identifizierten realen Roboter mit einem entsprechenden virtuellen Knickarmroboter (202) verknüpfen,
Konfigurationsdaten zu der bestimmten Konfiguration des mindestens einen identifizierten realen Roboters (203) an dem realen Ort extrahieren und
anhand der extrahierten Konfigurationsdaten eine bestimmte virtuelle Konfiguration des virtuellen Roboters (202) in der virtuellen Umgebung festlegen, die der Konfiguration des entsprechenden realen Roboters (203) an dem realen Ort entspricht,
den virtuellen Roboter auf der Grundlage der festgelegten bestimmten virtuellen Konfiguration in einer festgelegten bestimmten virtuellen Pose in der virtuellen Umgebung positionieren und,
wenn mindestens zwei Roboterposen festgelegt sind, unter Berücksichtigung einer Reihe von definierten Zwangsbedingungen den Roboterweg zwischen Posen berechnen.

## Revendications

1. Procédé pour l'enseignement, par un système de traitement de données, d'une configuration d'un robot réel articulé dans un environnement réel par la détermination d'une configuration d'un robot virtuel articulé dans un environnement virtuel, dans lequel l'environnement virtuel est muni d'au moins un robot virtuel représentant au moins un robot réel ; l'au moins un robot virtuel étant défini par un modèle virtuel tridimensionnel (3D) ; le procédé comprenant :
la réception (305) d'un positionnement d'un appareil de prise de vues 3D (201) dans une scène réelle ;
l'inscription (310) de l'appareil de prise de vues 3D (201) dans l'environnement virtuel ;
la réception (315) d'un positionnement d'au moins un robot réel (203) articulé selon une configuration spécifique dans la scène réelle ; la configuration du robot étant variée manuellement par la main d'un utilisateur de sorte qu'une programmation du robot puisse être commodément effectuée via un guidage physique du robot ;
la capture (320), par l'appareil de prise de vues 3D, d'au moins une image 3D de l'au moins un robot réel (203) positionné dans la scène réelle ;
l'identification (325), à partir de l'au moins une image 3D capturée, de l'au moins un robot réel (203) ;
la liaison (330) de l'au moins un robot réel (203) identifié à un robot virtuel (202) articulé correspondant ;
l'extraction (335) de données de configuration de la configuration spécifique dans la scène réelle de l'au moins un robot réel (203) identifié ; et
la détermination (340), à partir des données de configuration extraites, d'une configuration virtuelle spécifique du robot virtuel (202) dans l'environnement virtuel (204) reflétant la configuration du robot réel (203) correspondant dans la scène réelle ;
le positionnement, dans l'environnement virtuel, du robot virtuel (202) selon une pose virtuelle spécifique déterminée basée sur la configuration virtuelle spécifique déterminée ; et,
une fois qu'au moins deux poses de robot sont déterminées, le calcul du trajet robotique entre poses en prenant en compte un ensemble de contraintes définies.

2. Procédé selon la revendication 1, dans lequel le modèle virtuel 3D est sélectionné parmi le groupe constitué :
d'un modèle de conception assisté par ordinateur (CAD) ;
d'un modèle de type CAD ;
d'un modèle de nuage de points ; et
d'un modèle informatique 3D.

3. Procédé selon la revendication 1 ou 2, comprenant en outre :
la réception d'une variation de positionnement d'une seconde configuration spécifique de l'au moins un robot réel (203) identifié ;
la répétition de la capture, de l'extraction, et de la détermination de façon à déterminer à nouveau la configuration du robot virtuel (202) lié selon une seconde configuration virtuelle spécifique dans l'environnement virtuel (204) reflétant la seconde configuration spécifique du robot réel (203) correspondant dans la scène réelle.

4. Procédé selon l'une quelconque des revendications précédentes, dans lequel la liaison est réalisée automatiquement via prélèvement.

5. Procédé selon l'une quelconque des revendications 1 à 3, dans lequel la liaison est conçue pour être réalisée manuellement.

6. Système de traitement de données comprenant :
un processeur ; et
une mémoire accessible, le système de traitement de données étant particulièrement configuré pour :
recevoir un positionnement d'un appareil de prise de vues tridimensionnelles 3D dans une scène réelle ;
inscrire l'appareil de prise de vues 3D (201) dans l'environnement virtuel ;
recevoir un positionnement d'au moins un robot réel (203) articulé selon une configuration spécifique dans la scène réelle ; la configuration du robot étant variée manuellement par la main d'un utilisateur de sorte qu'une programmation du robot puisse être commodément effectuée via un guidage physique du robot ;
recevoir des entrées, par l'appareil de prise de vues 3D (201), de la capture d'au moins une image 3D de l'au moins un robot réel (203) positionné dans la scène réelle ;
identifier, à partir de l'au moins une image 3D capturée, l'au moins un robot réel (203) ;
lier l'au moins un robot réel (203) identifié à un robot virtuel (202) articulé correspondant ;
extraire des données de configuration de la configuration spécifique dans la scène réelle de l'au moins un robot réel identifié ; et
déterminer, à partir des données de configuration extraites, une configuration virtuelle spécifique du robot virtuel dans l'environnement virtuel reflétant la configuration du robot réel correspondant dans la scène réelle,
positionner, dans l'environnement virtuel, le robot virtuel (202) selon une pose virtuelle spécifique déterminée basée sur la configuration virtuelle spécifique déterminée ; et,
une fois qu'au moins deux poses de robot sont déterminées, calculer le trajet robotique entre poses en prenant en compte un ensemble de contraintes définies.

7. Système de traitement de données selon la revendication 6, dans lequel le modèle virtuel 3D est sélectionné parmi le groupe constitué :
d'un modèle de conception assisté par ordinateur (CAD) ;
d'un modèle de type CAD ;
d'un modèle de nuage de points ; et
d'un modèle informatique 3D.

8. Support non transitoire lisible par ordinateur codé avec des instructions exécutables qui, lors de leur exécution, amènent un ou plusieurs systèmes de traitement de données à :
recevoir un positionnement d'un appareil de prise de vues tridimensionnelles 3D (201) dans une scène réelle ;
inscrire l'appareil de prise de vues 3D (201) dans l'environnement virtuel ;
recevoir un positionnement d'au moins un robot réel (203) articulé selon une configuration spécifique dans la scène réelle ; la configuration du robot étant variée manuellement par la main d'un utilisateur de sorte qu'une programmation du robot puisse être commodément effectuée via un guidage physique du robot ;
recevoir des entrées, par l'appareil de prise de vues 3D, de la capture d'au moins une image 3D de l'au moins un robot réel (203) positionné dans la scène réelle ;
identifier, à partir de l'au moins une image 3D capturée, l'au moins un robot réel (203) ;
lier l'au moins un robot réel identifié à un robot virtuel (202) articulé correspondant ;
extraire des données de configuration de la configuration spécifique dans la scène réelle de l'au moins un robot réel (203) identifié ; et
déterminer, à partir des données de configuration extraites, une configuration virtuelle spécifique du robot virtuel (202) dans l'environnement virtuel reflétant la configuration du robot réel (203) correspondant dans la scène réelle ;
positionner, dans l'environnement virtuel, le robot virtuel selon une pose virtuelle spécifique déterminée basée sur la configuration virtuelle spécifique déterminée ; et,
une fois qu'au moins deux poses de robot sont déterminées, calculer le trajet robotique entre poses en prenant en compte un ensemble de contraintes définies.
